# EUROPEAN PATENT APPLICATION

(11) **EP 2 048 519 A2**
(43) Date of publication of application: **15.04.2009**
(21) Application number: 08166490.6
(22) Date of filing: 13.10.2008
(51) Int. Cl.: G01V 1/28

(54) **Seismic data processing workflow decision tree**

(30) Priority: 12.10.2007 US 979804 P; 07.10.2008 US 246781
(71) Applicant: Geco Technology B.V., 2586 BJ S'Gravenhage (NL)
(72) Inventor: Kavanagh, Gerard, Horsham, Sussex RH12 2DA (GB); Scott, Ian, Guilford, Surrey GU2 2YG (GB); Bouzas, Horacio R., London, SW11 2RB (GB)
(74) Representative: Suckling, Andrew Michael

(57) **Abstract**

Implementations of various technologies for a method for modifying a seismic data processing workflow. In one implementation, the method may include displaying the seismic data processing workflow in a hierarchical structure. The hierarchical structure may have one or more branches and one or more nodes. Each branch may represent a parameter value. Each node may represent a data output of a seismic data process performed with the parameter value. A selection of a node may be received. A graphical representation of the data output for the selected node may be displayed.

## Description

### CROSS-REFERENCE TO RELATED APPLICATIONS

This application claims benefit of United States provisional patent application serial number 60/979,804, filed October 12, 2007, which is herein incorporated by reference.

### BACKGROUND

### Field of the Invention

Implementations of various technologies described herein generally relate to methods and systems for seismic data processing.

### Description of the Related Art

The following descriptions and examples are not admitted to be prior art by virtue of their inclusion within this section.

In the seismic industry, data processing is a complex, time-consuming and costly exercise that obtains useful information from acquired seismic data. Data processing workflows may include many stages (e.g., five to ten processing stages) and each stage requires many parameters. Before running a data processing job, which may take many months to finish, many test runs are performed on a small portion of the seismic dataset such that optimum processing parameters and work flow can be determined.

Testing is performed in general by the use of batch jobs with a suite of parameters to test. These test jobs are then run overnight and evaluated the following day to see that the test jobs have run correctly. Test data "panels," which are images of seismic data generated by the test jobs, may then be passed to an analyst for a final decision on the parameters to use for the next production processing run. As test jobs often run in parallel, it is almost impossible to measure the true impact of testing on the turnaround time for a full production run. The permutations of stages and parameters potentially produce voluminous test runs. For example, a 6-stage, 10-parameter data processing workflow could have 1 million different testing scenarios.

### SUMMARY

Described herein are implementations of various technologies for a method for modifying a seismic data processing workflow. In one implementation, the method may include displaying the seismic data processing workflow in a hierarchical structure. The hierarchical structure may have one or more branches and one or more nodes. Each branch may represent a parameter value. Each node may represent a data output of a seismic data process performed with the parameter value. A selection of a node may be received. A graphical representation of the data output for the selected node may be displayed.

In another implementation, a user input for the selected node may be received. The user input may correspond to a parameter value. The seismic data processing workflow may be modified based on the user input. The seismic data processing workflow may be modified by modifying one or more nodes below the selected node.

In yet another implementation, a selection of an alternate node to replace the selected node may be received. The seismic data processing workflow may be modified by generating one or more branches downstream from the alternate node. In such an implementation, the seismic data processing workflow may also be modified by generating one or more nodes below the alternate node.

The claimed subject matter is not limited to implementations that solve any or all of the noted disadvantages. Further, the summary section is provided to introduce a selection of concepts in a simplified form that are further described below in the detailed description section. The summary section is not intended to identify key features or essential features of the claimed subject matter, nor is it intended to be used to limit the scope of the claimed subject matter.

### BRIEF DESCRIPTION OF THE DRAWINGS

Implementations of various technologies will hereafter be described with reference to the accompanying drawings. It should be understood, however, that the accompanying drawings illustrate only the various implementations described herein and are not meant to limit the scope of various technologies described herein.

Figure 1 illustrates a flowchart of a method for autonomous seismic data processing in accordance with one or more implementations of various techniques described herein.

Figure 2 illustrates a data flow diagram of a method for selecting parameters for an autonomous seismic data processing system according to implementations described herein.

Figure 3 illustrates a flowchart of an autonomous seismic data processing system according to implementations described herein.

Figure 4 illustrates a flowchart of a method for ranking datasets in an autonomous seismic data processing system according to implementations described herein.

Figures 5A-5B illustrates a seismic data processing workflow decision tree according to implementations described herein.

Figure 6 illustrates a computer network into which implementations of various technologies described herein may be implemented.

### DETAILED DESCRIPTION

The discussion below is directed to certain specific implementations. It is to be understood that the discussion below is only for the purpose of enabling a person with ordinary skill in the art to make and use any subject matter defined now or later by the patent "claims" found in any issued patent herein.

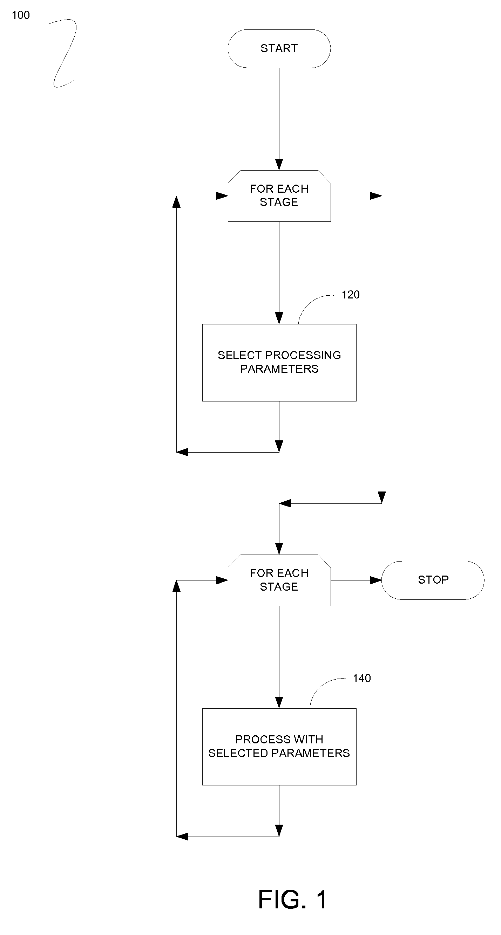

The following paragraph provides a brief summary of various techniques described herein. In general, various techniques described herein are directed to a system for autonomous seismic data processing. Rather than relying on user intervention to limit testing and production data processing scenarios, the autonomous processing system may evaluate seismic data at each stage of processing to reduce data processing scenarios. At each stage of data processing, multiple datasets may be generated. Each of the generated datasets may represent a possible path in the data processing workflow. In the autonomous seismic data processing system, the generated datasets may be ranked based on the values of specified attributes within each of the datasets. The processing workflows may then be limited to the datasets with the highest rankings. In one implementation, suites of parameters may be tested against samples of seismic data to limit the parameters used in the production processing. One or more implementations of various techniques for autonomous seismic data processing will now be described in more detail with reference to Figures 1-5 in the following paragraphs.

Figure 1 illustrates a flowchart of a method 100 for autonomous seismic data processing in accordance with one or more implementations of various techniques described herein. It should be understood that while the method 100 indicates a particular order of execution of the operations, in some implementations, certain portions of the operations might be executed in a different order.

Typically, seismic data processing takes place in multiple stages. Seismic data may be processed in numerous ways, depending on the needs of a user. For example, a user may want to perform noise reduction and demultiples processing on the seismic data. Each of these processes may take place in different stages of seismic data processing. For example, the seismic data may first undergo noise reduction, then the noise reduced data may be input to the demultiples process. Accordingly, steps 110-120 may be repeated for each stage of the seismic data processing.

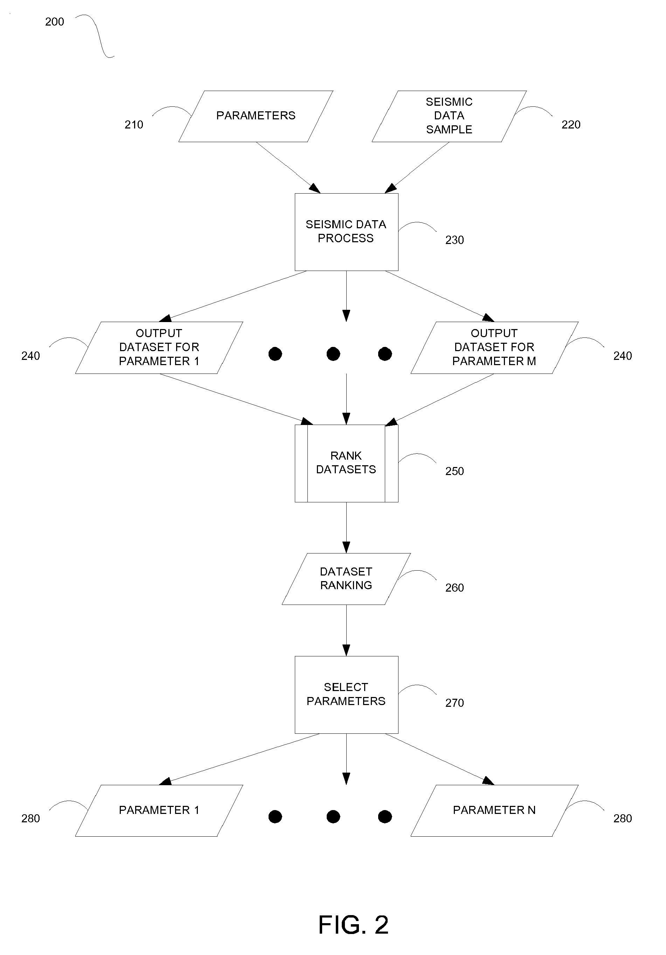

Additionally, each stage may be processed with numerous parameters. Testing a full gather or other seismic data volume against a large suite of parameters may use resources that overwhelm a typical seismic data processing system. Accordingly, at step 120, a portion of the parameters may be selected from the larger suite. Step 120 is described in greater detail with reference to Figure 2.

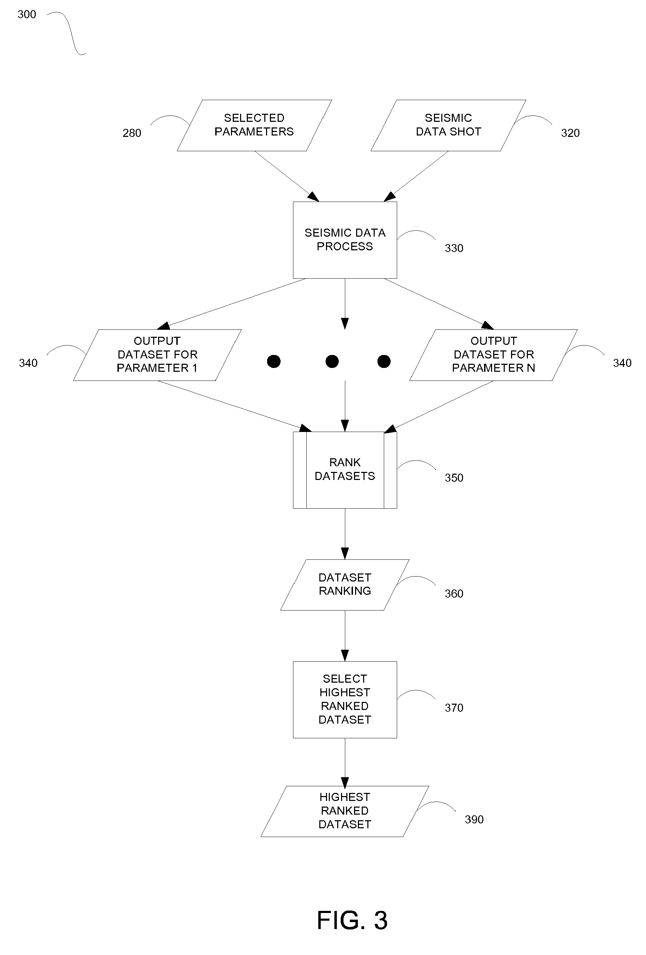

Once the parameters are selected for each stage, steps 130-140 may be repeated for each stage of the autonomous seismic data processing. At step 140, the seismic data may be processed with the parameters selected for the particular stage. Step 140 is described in greater detail with reference to Figure 3.

Figure 2 illustrates a data flow diagram of a method 200 for selecting parameters for an autonomous seismic data processing system according to implementations described herein. As mentioned above, method 200 may be an implementation of step 120.

A suite of parameters 210 and a seismic data sample 220 may be input to a seismic data process 230. The seismic data sample 220 may be collected in a seismic survey. In another implementation, the seismic data sample 220 may be a sampling of seismic data that is used for synthetic seismogram generation, or velocity modeling.

The seismic data sample 220 may include a number of attributes that describe seismic data. Such attributes may include signal to noise ratio, seismic frequency, continuity, bandwidth, uncertainty and the like. It should be noted that these are merely examples of attributes, and are not intended to limit implementations of various technologies described herein.

The seismic data process 230 may be any one of a number of seismic data processes, such as a remove multiples process, band pass filtering process, frequency and wavenumber (FK) filtering process, seismic stacking process, deconvolution process, migration process and the like. It should be noted that these are merely examples of seismic data processes. The examples listed are not intended to limit implementations of various technologies described herein.

The seismic data process 230 may generate an output dataset 240 for each of the parameters 210. The parameters 210 may be a number of data values used in a particular seismic data process. For example, parameters in a seismic stacking process may include a number of different mutes. In Figure 2, m output datasets 240 are generated, indicating m parameters in the parameters 210.

In one implementation, more than one seismic data process 230 may be used to process the seismic data sample 220. In such an implementation, the parameters 210 only include one value and thus, each seismic data process 230 will generate one output dataset 240.

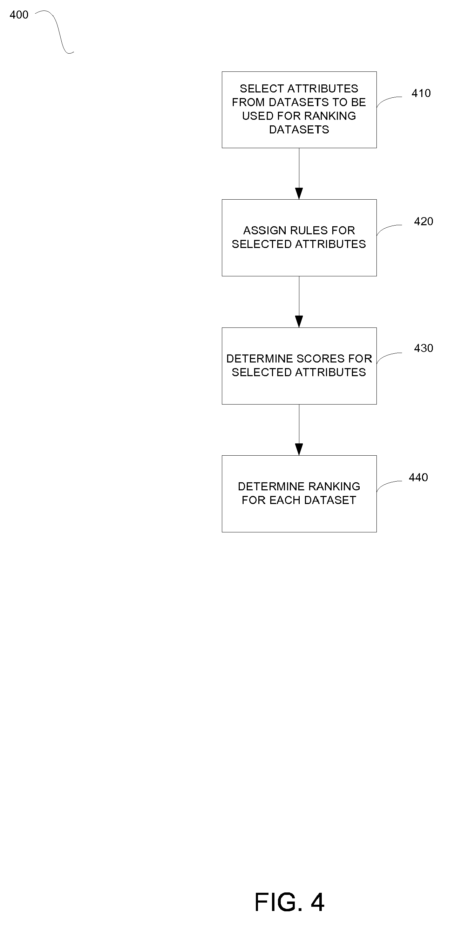

The output datasets 240 may then be input to a rank datasets process 250. The rank datasets process 250 may generate a dataset ranking 260 that ranks the output datasets 240 according to specified rules. These rules may indicate how to rank the output datasets 240 based on the values of attributes within the output datasets 240. For example, one rule may rank the output datasets 240 according to the values of the signal to noise ratio attribute. In such a scenario, the output datasets 240 with high signal to noise ratios may be ranked higher than output datasets 240 with lower signal to noise ratios. The rank datasets process 250 is described in greater detail with reference to Figure 4.

The dataset ranking 260 may be input to a select parameters process 270. The select parameters process 270 may determine the selected parameters 280 that are used to generate the highest ranked datasets in the dataset ranking 260. In the scenario where the output datasets 240 are generated for multiple seismic data processes 230, the select parameters process 270 may determine the seismic data processes 230 that generate the highest ranked datasets. In Figure 2, n parameters are shown, indicating that n parameters are selected from the m parameters in the original parameters 210, where n parameters is a portion of m parameters.

Figure 3 illustrates a flowchart of a method 300 for autonomous seismic data processing according to implementations described herein. As mentioned above, method 300 may be an implementation of step 140. Method 300 may represent the actual production run of seismic data processing, using the selected parameters 280 from the method 200.

The selected parameters 280 and a seismic data 320 may be input to a seismic data process 330. Similar to the seismic data sample 220, the seismic data 320 may include a number of attributes for describing seismic data. However, the seismic data 320 may include a full shot of seismic data instead of a sampling.

The seismic data process 330 may generate an output dataset 340 for each selected parameter 280. For a particular stage, the seismic data process 330 may correspond with the seismic data process 230 used in method 200 for that stage. In other words, if the seismic noise reduction process is the seismic data process 230 in method 200, then the seismic noise reduction process is the seismic data process 330 in method 300. In one implementation, the method 300 may be used without benefit of the method 200 for selecting parameters. In such an implementation, the selected parameters 280 may include the full suite of parameters 210. Alternately, the selected parameters 280 may be a limited set of parameters selected by the user from the full suite of parameters 210.

Similar to the seismic data process 230, the seismic data process 330 may generate an output dataset 340 for each parameter in the selected parameters 280. The output datasets 340 may be input to a rank datasets process 350. The rank datasets process 350 may generate a dataset ranking 360 that ranks the output datasets 340 according to the rules described above. The rank datasets process 350 is described in greater detail with reference to Figure 4.

The dataset ranking 360 may be input to a select highest ranked dataset process 370, where a highest ranked dataset 390 of the output datasets 340 is selected. In one implementation, the highest ranked dataset 390 may be input to a second seismic data process in the next stage of the autonomous seismic data processing.

In another implementation, the dataset ranking 360 may be insufficient to select the highest ranked dataset. For example, there may be multiple output datasets 340 with equally high rankings. In such a scenario, the select highest ranked dataset process 370 may incorporate an Andon process. In the Andon process, the user may specify conditions under which there is no highest ranked dataset 390 selected, and conditions under which the user intervenes to select the highest ranked dataset 390. In a scenario where no highest ranked dataset 390 is selected, the multi-stage seismic data process (described in Figure 1) may be halted.

Figure 4 illustrates a flowchart of a method 400 for ranking datasets in an autonomous seismic data processing system according to implementations described herein. The method 400 may be performed by the rank datasets processes 250, 350.

At step 410, a portion of the attributes may be selected from the output datasets 240, 340. The selected attributes may be used for ranking the output datasets 240, 340. More specifically, values in the selected attributes may be compared across the output datasets 240, 340 in order to rank the output datasets 240, 340 against each other.

At step 420, a rule may be assigned to each of the selected attributes. The rule may specify how to score a particular value of an attribute for one of the output datasets 240, 340. The score is also referred to herein as a quality score. The quality score may indicate the quality of data in the output datasets. In other words, the quality score may indicate a preference level for certain values of the selected attribute in the ranking of the output datasets 240, 340. For example, high values in the high frequency bandwidth attribute may be preferred over low values. In this instance, a rule may specify that a high value in the high frequency bandwidth attribute is scored higher than a low value in the high frequency bandwidth attribute.

In one implementation, the rule may be based on how the value of the attribute is changed by the seismic data processes 230, 330. For example, the rule may specify that the score for an increase in the signal to noise ratio is higher than the score for a decrease. In such a case, the value of the noise to signal ratio in the input dataset, e.g., the seismic data sample 220, may be compared to the value in the output dataset 240. The score for the signal to noise ratio attribute may then be scored accordingly.

In another implementation, the rule may be based on a range of expected values for the selected attribute. In other words, values of the attribute within a specified range of expected values may be scored higher than values outside of the range. In such an implementation, the score may be based on where the value of the attribute lies within the range.

At step 430, the quality score may be determined for each selected attribute for each dataset based on the rule for the selected attribute. In one implementation, a control dataset may be used to determine the quality score for the selected attribute. The control dataset may be used in comparison with the output datasets 240, 340 in determining the score of selected attributes. In the scenario where high values are preferred for the high frequency bandwidth attribute, the control dataset may have a threshold value for the high frequency bandwidth. The high frequency bandwidth value in each of the output datasets 240, 340 may be compared to the high frequency bandwidth value in the control dataset. If the high frequency bandwidth value in the output datasets 240, 340 is greater than the high frequency bandwidth value in the control dataset, the high frequency bandwidth attribute may be scored higher. Similarly, if the high frequency bandwidth value in the output datasets 240, 340 is less than the high frequency bandwidth value in the control dataset, the high frequency bandwidth attribute may be scored lower.

In one implementation, the quality scores of each selected attribute may be normalized across the output datasets 240, 340. The normalization may map the quality scores to a 0-100 scale. On the 0-100 scale, the selected attribute for the output dataset 240, 340 with the lowest score may be normalized as 0. Similarly, the selected attribute for the output dataset 240, 340 with the highest score may be normalized as 100. The quality scores that fall between the highest and lowest scores may be apportioned accordingly between 0 and 100.

At step 440, the ranking for each dataset may be determined based on the quality scores for each attribute of the output datasets 240, 340. For example, after the quality scores for each attribute have been determined, each dataset may include a number of quality scores, one for each of the selected attributes. The ranking may be based on the cumulative scores for each of the output datasets 240, 340. In one implementation, the scores for each of the selected attributes may be weighted before added into a fuzzy logic control system that determines the ranking.

Fuzzy logic is a form of multi-valued logic to deal with reasoning that is approximate rather than precise. Fuzzy logic is best explained in opposition to binary logic. In binary logic, the truth of a statement can be evaluated as a binary number. In other words, the truth of a statement is exclusively 0 (false) or 1 (true). With binary logic, a statement is true or it is not. In fuzzy logic, a degree of truth can be determined, where the truth of a statement, expressed numerically, can range between 0 and 1. In fuzzy logic, the truth of a statement is not constrained to the two truth values {true, false} as in binary logic. Instead, the truth of a statement can range between 0 and 1, inclusively.

In another implementation, the ranking may be based on categories of attributes where each of the attributes may belong to higher level categories. For example, a bandwidth category may include a high frequency bandwidth attribute, and a low frequency bandwidth attribute. In such an implementation, cumulative scores for each category may be determined by a fuzzy logic control system based on the scores of the attributes within each category. The ranking may then be determined by a second fuzzy logic control system that uses the cumulative scores for the categories for each dataset.

In another implementation, the scores for each of the selected attributes may be weighted within each category to determine the cumulative scores for the categories. The categories themselves may also be weighted before determining the rankings based on the categories. In yet another implementation, the categories may be normalized across the datasets. The normalization of the categories of the datasets may be performed in a manner similar to the normalization of the attributes described above.

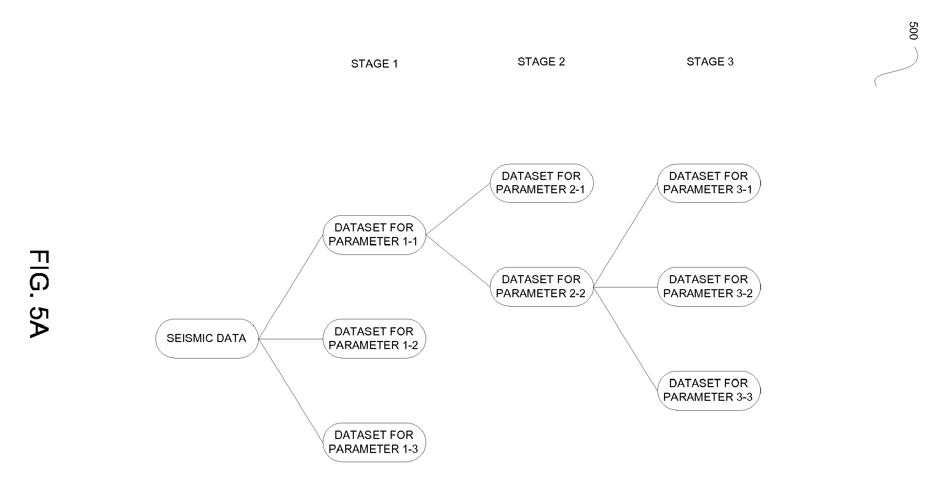

Figure 5A illustrates a seismic data processing workflow decision tree 500 according to implementations described herein. As stated previously, the method 300 may be repeated in sequential stages of the autonomous seismic data processing. In such a scenario, the highest ranked dataset 390 from one stage is input as the seismic data 320 for the next stage. The seismic data processing workflow represents this succession of stages in a particular production processing run. For simplicity, the seismic data processing workflow is also referred to herein as the workflow.

The workflow may result in many possible permutations, with each of the output datasets 340 having the possibility of becoming the highest ranked dataset 390 for the next stage. These permutations may be represented in an interface, such as the seismic data processing workflow decision tree 500. For simplicity, the seismic data processing workflow decision tree 500 may be referred to herein as decision tree 500.

The decision tree 500 includes several levels of nodes and branches. Each level of the decision tree 500 may represent a stage of seismic data processing. As shown, the first level of the decision tree 500 represents stage 1, the second level, stage 2, etc. The branches may represent the selected parameters 280. Accordingly, each branch represents one parameter. Each branch is connected to the nodes that represent the input and output for a particular stage, i.e., the seismic data 320, and the output dataset 340, respectively. Inputs are to the left of the branches and outputs to the right. Each individual branch may represent the parameter in the selected parameters 280 that produced the output dataset 340.

For example, the root node, labeled, "SEISMIC DATA," represents the seismic data 320. The root node has 3 branches, representing 3 parameters in stage 1 of the workflow. Each branch is connected to a node, labeled, respectively, "DATASET FOR PARAMETER 1-1," "DATASET FOR PARAMETER 1-2," and "DATASET FOR PARAMETER 1-3." These nodes represent the output datasets 340 generated in stage 1 of the workflow.

It should be noted that the labels in the nodes below the root node contain 2 numbers. The first number represents the stage of processing. The second number is a sequential number identifying each parameter for the stage. For example, the "DATASET FOR PARAMETER 1-2" may be generated in stage 1, using the 2^{nd} parameter of the selected parameters 280.

In addition to the parameters and datasets used in the seismic data processing, the decision tree 500 may represent the workflow of the seismic data processing. More specifically, the decision tree 500 may indicate which output datasets 340 are selected as the highest ranked dataset 390 for each stage.

As stated previously, the highest ranked dataset 390 from one stage may be input to the next stage as the seismic data 320. The decision tree 500 illustrates that the "DATASET FOR PARAMETER 1-1" is input to stage 2. Accordingly, the "DATASET FOR PARAMETER 1-1" may be the highest ranked dataset 390 for stage 1.

Similarly, the decision tree 500 illustrates that the "DATASET FOR PARAMETER 2-2" is input to stage 3. Accordingly, the "DATASET FOR PARAMETER 2-2" may be the highest ranked dataset 390 for stage 2.

In one implementation, the decision tree 500 may be configured to display the content of the output datasets 340 represented by the nodes. For example, the user may select one of the nodes. In response, a graph representing the content of the output dataset 340 associated with the selected node may be displayed.

In another implementation, the decision tree 500 may be configured to modify the seismic data processing workflow. In such an implementation, modifications to the workflow may be introduced by changing a parameter value used in a particular branch.

For example, the user may select one of the nodes representing the output dataset 340. The user may then modify the parameter value used to generate the output dataset 340. In response, the stage of processing that produced the output dataset 340 may be re-run with the modified parameter value to generate a new output dataset 340. The new output dataset 340 may then be input to the next stage of processing. Accordingly, the modification may be cascaded down the decision tree 500 by re-running the subsequent stages of the seismic data processing with the newly generated output datasets 340.

For example, the user may select the node labeled "DATASET FOR PARAMETER 2-2," and enter a modified value for the parameter used to generate the "DATASET FOR PARAMETER 2-2." In response, the seismic data process 330 for stage 2 may be re-run with the modified parameter value, producing a new "DATASET FOR PARAMETER 2-2." The new "DATASET FOR PARAMETER 2-2" may then be input to stage 3, which is re-run to produce a new "DATASET FOR PARAMETER 3-1," and "DATASET FOR PARAMETER 3-2."

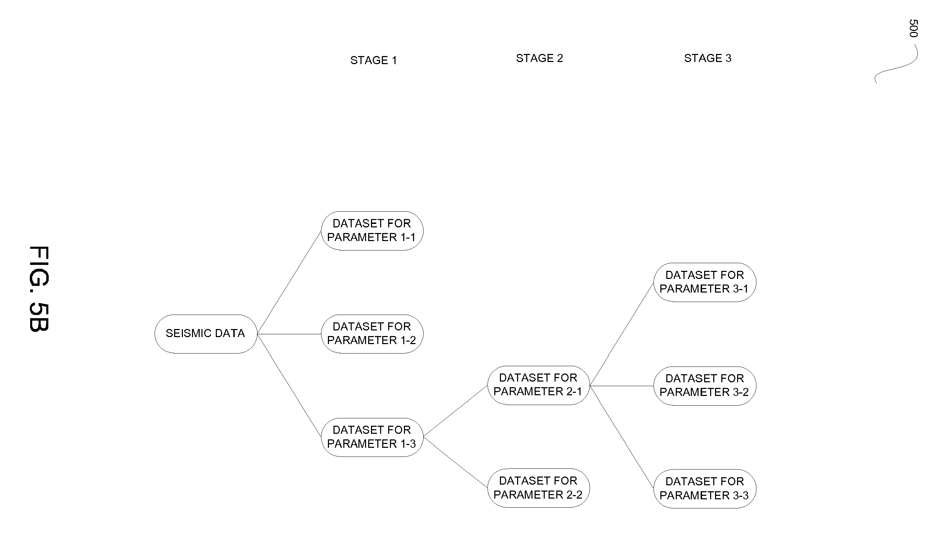

Modifications to the workflow may also be introduced by changing the decisions in the decision tree. In other words, the user may select an alternate node to the highest ranked dataset node, and the seismic data processing workflow may be modified accordingly. For example, the "DATASET FOR PARAMETER 1-1" represents the highest ranked dataset 390 for stage 1. The user may instead select the "DATASET FOR PARAMETER 1-3." In such a scenario, stage 1 and all subsequent stages of the seismic data processing workflow may be repeated, with a new decision tree 500 resulting. Figure 5B illustrates the new decision tree 500 resulting from the selection of the "DATASET FOR PARAMETER 1-3," to replace "DATASET FOR PARAMETER 1-1."

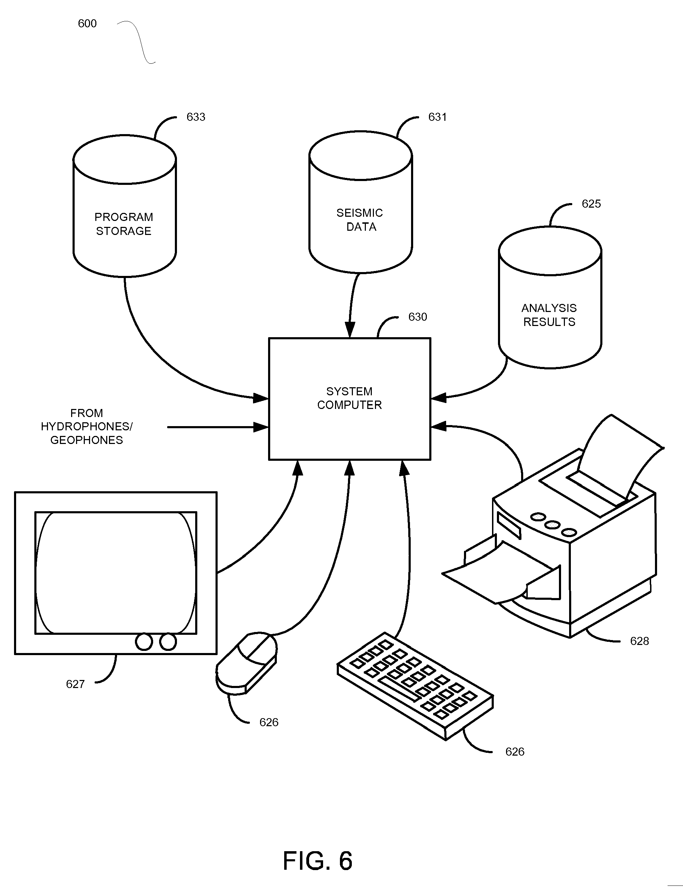

Figure 6 illustrates a computing system 600, into which implementations of various technologies described herein may be implemented. The computing system 600 may include one or more system computers 630, which may be implemented as any conventional personal computer or server. However, those skilled in the art will appreciate that implementations of various technologies described herein may be practiced in other computer system configurations, including hypertext transfer protocol (HTTP) servers, hand-held devices, multiprocessor systems, microprocessor-based or programmable consumer electronics, network PCs, minicomputers, mainframe computers, and the like.

The system computer 630 may be in communication with disk storage devices 629, 631, and 633, which may be external hard disk storage devices. It is contemplated that disk storage devices 629, 631, and 633 are conventional hard disk drives, and as such, will be implemented by way of a local area network or by remote access. Of course, while disk storage devices 629, 631, and 633 are illustrated as separate devices, a single disk storage device may be used to store any and all of the program instructions, measurement data, and results as desired.

In one implementation, seismic data from the receivers may be stored in disk storage device 631. The system computer 630 may retrieve the appropriate data from the disk storage device 631 to process seismic data according to program instructions that correspond to implementations of various technologies described herein. The program instructions may be written in a computer programming language, such as C++, Java and the like. The program instructions may be stored in a computer-readable medium, such as program disk storage device 633. Such computer-readable media may include computer storage media and communication media. Computer storage media may include volatile and non-volatile, and removable and non-removable media implemented in any method or technology for storage of information, such as computer-readable instructions, data structures, program modules or other data. Computer storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the system computer 630.

Communication media may embody computer readable instructions, data structures, program modules or other data in a modulated data signal, such as a carrier wave or other transport mechanism and may include any information delivery media. The term "modulated data signal" may mean a signal that has one or more of its characteristics set or changed in such a manner as to encode information in the signal. By way of example, and not limitation, communication media may include wired media such as a wired network or direct-wired connection, and wireless media such as acoustic, RF, infrared and other wireless media. Combinations of any of the above may also be included within the scope of computer readable media.

In one implementation, the system computer 630 may present output primarily onto graphics display 627, or alternatively via printer 628. The system computer 630 may store the results of the methods described above on disk storage 629, for later use and further analysis. The keyboard 626 and the pointing device (e.g., a mouse, trackball, or the like) 625 may be provided with the system computer 630 to enable interactive operation.

The system computer 630 may be located at a data center remote from the survey region. The system computer 630 may be in communication with the receivers (either directly or via a recording unit, not shown), to receive signals indicative of the reflected seismic energy. These signals, after conventional formatting and other initial processing, may be stored by the system computer 630 as digital data in the disk storage 631 for subsequent retrieval and processing in the manner described above. While Figure 6 illustrates the disk storage 631 as directly connected to the system computer 630, it is also contemplated that the disk storage device 631 may be accessible through a local area network or by remote access. Furthermore, while disk storage devices 629, 631 are illustrated as separate devices for storing input seismic data and analysis results, the disk storage devices 629, 631 may be implemented within a single disk drive (either together with or separately from program disk storage device 633), or in any other conventional manner as will be fully understood by one of skill in the art having reference to this specification.

While the foregoing is directed to implementations of various technologies described herein, other and further implementations may be devised without departing from the basic scope thereof, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of modifying a seismic data processing workflow, comprising:
displaying the seismic data processing workflow in a hierarchical structure having one or more branches and one or more nodes, wherein each branch represents a parameter value and each node represents a data output of a seismic data process performed with the parameter value;
receiving a selection of a node; and
displaying a graphical representation of the data output for the selected node.

2. The method of claim 1, further comprising:
receiving a user input for the selected node, wherein the user input corresponds to the parameter value; and
modifying the seismic data processing workflow based on the user input.

3. The method of claim 2, wherein modifying the seismic data processing workflow comprises modifying one or more branches downstream from the selected node and/or modifying one or more nodes below the selected node.

4. The method of claim 1, 2 or 3, further comprising:
receiving a selection of an alternate node to replace the selected node; and
modifying the seismic data processing workflow based on the selection of the alternate node.

5. The method of claim 4, wherein modifying the seismic data processing workflow comprises generating one or more branches downstream from the alternate node and/or generating one or more nodes below the alternate node.

6. The method of claim 4 or 5, further comprising displaying a graphical representation of the data output for the alternate node.

7. A computer-readable medium having stored thereon computer-executable instructions which, when executed by a computer, cause the computer to:
display the seismic data processing workflow in a hierarchical structure having one or more branches and one or more nodes, wherein each branch represents a seismic data process and each node represents a data output of the branch;
receive a selection of a node;
receive a user input for the selected node, wherein the user input corresponds to a parameter value; and
modify the seismic data processing workflow based on the user input.

8. The computer-readable medium of claim 7, wherein modifying the seismic data processing workflow comprises modifying one or more branches downstream from the selected node and/or modifying one or more nodes below the selected node.

9. The computer-readable medium of claim 7 or 8, further comprising computer-executable instructions which, when executed by a computer, cause the computer to:
receive a selection of an alternate node to replace the selected node; and
modify the seismic data processing workflow based on the selection of the alternate node.

10. The computer-readable medium of claim 9, wherein the seismic data processing workflow is modified by generating one or more branches downstream from the alternate node and/or is modified by generating one or more nodes below the alternate node.

11. The computer-readable medium of claim 9, further comprising computer-executable instructions which, when executed by a computer, cause the computer to display a graphical representation of the data output for the alternate node.

12. A computer system, comprising:
a processor; and
a memory comprising program instructions executable by the processor to:
display a seismic data processing workflow in a hierarchical structure having one or more branches and one or more nodes, wherein each branch represents a parameter value and each node represents a data output of a seismic data process performed with the parameter value;
receive a selection of a node;
receive a selection of an alternate node to replace the selected node; and
modify the seismic data processing workflow based on the selection of the alternate node.

13. The computer system of claim 12, wherein the seismic data processing workflow is modified by generating one or more branches downstream from the alternate node.

14. The computer system of claim 12, wherein the seismic data processing workflow is modified by generating one or more nodes below the alternate node.

15. The computer system of claim 12, wherein the memory further comprises program instructions executable by the processor to display a graphical representation of the data output for the alternate node.
